# EUROPÄISCHE PATENTSCHRIFT

(11) **EP 1 888 387 B1**
(45) Veröffentlichungstag und Bekanntmachung des Hinweises auf die Patenterteilung: **29.07.2009**
(21) Anmeldenummer: 06754229.0
(22) Anmeldetag: 08.06.2006
(51) Int. Cl.: B60T 8/48

(54) **Bremskreis für eine hydraulische Bremsanlage, Bremsanlage mit einem derartigen Bremskreis und Verfahren zur Steuerung einer hydraulischen Bremsanlage für ein Landfahrzeug**
Brake circuit for a hydraulic braking system, braking system with such a brake circuit and a method for controlling a hydraulic braking system of a terrestrial vehicle
Circuit de freinagepor un système de freinage hydraulique, système de freinage avec un tel circuit de freinage et une méthode de commande d'un système de freinage hydraulique pour un véhicule terrestre

(30) Priorität: 09.06.2005 DE 102005026739
(43) Veröffentlichungstag der Anmeldung: 20.02.2008
(73) Patentinhaber: Lucas Automotive GmbH, 56070 Koblenz (DE)
(72) Erfinder: HELLER, Frank, 56154 Boppard (DE); KNECHTGES, Josef, 56727 Mayen (DE)
(74) Vertreter: Schmidt, Steffen
(86) Internationale Anmeldenummer: PCT/EP2006/005490
(87) Internationale Veröffentlichungsnummer: WO 2006/131366

(56) Entgegenhaltungen:
- EP-A- 0 696 533
- EP-A- 0 965 509
- WO-A-01/14193
- WO-A-94/27848
- WO-A-97/13670
- WO-A-03/018379
- DE-A1- 4 121 470
- DE-A1- 19 527 805

## Beschreibung

### Gebiet der Erfindung

Die vorliegende Erfindung betrifft in Allgemeinen hydraulische Bremsanlagen für Landfahrzeuge und insbesondere Vorrichtungen und Verfahren zur Kompensation von Störeinflüssen bei Verwendung solcher Bremsanlagen.

### Hintergrund der Erfindung

Hydraulische Bremsanlagen für Landfahrzeuge können dazu eingerichtet sein, neben vom Fahrer gesteuerten Bremsvorgängen, automatische Bremsvorgänge durchzuführen, die unabhängig von einer Betätigung der Bremsanlage durch den Fahrer erfolgen. Beispiele für solche automatische Bremsvorgänge umfassen Bremsvorgänge zur Antriebsschlupfregelung (ASR), die ein Durchdrehen einzelner Räder beim Anfahrvorgang durch gezieltes Abbremsen der entsprechenden Räder verhindern, zur Fahrdynamikregelung, bei der Fahrzeugverhalten in Grenzbereichen durch gezieltes Abbremsen einzelner Räder gesteuert wird, und zur adaptiven Geschwindigkeitsregelung, bei der beispielsweise durch automatisches Abbremsen des Fahrzeugs vorgegebene Geschwindigkeiten und/oder Abstände zu vorausfahrenden Fahrzeugen eingehalten werden.

Automatische Bremsvorgänge sollen so erfolgen, dass sie vom Fahrer nicht wahrgenommen werden und/oder keine unerwünschten Fahrzeugbewegungen (beispielsweise Rucken und/ oder Schiefziehen des Fahrzeugs) verursachen. Diese Ziele sind aus mehreren Gründen schwierig zu erreichen.

Automatische Bremsvorgänge laufen üblicherweise bei geringen Bremsdrücken ab. Dabei kommen Störeinflüsse, wie zum Beispiel ungleiche Luftspiele zwischen Bremskolben und Bremsbelägen, ungleich abgenutzte Bremsbeläge, verschobene Bremskolben bzw. Bremsbeläge etc., besonders zum Tragen. Diese Störeinflüsse können bei Kurvenfahrten auftreten oder besonders verstärkt werden, da hier auch noch Querkräfte auf die Komponenten der Bremsanlage wirken. Derartige Störeinflüsse werden beim Betrieb von hydraulischen Bremsanlagen mit zwei Bremskreisen bei vom Fahrer gesteuerten Bremsvorgängen dadurch kompensiert, dass ein Druckausgleich zwischen den zwei Bremskreisen möglich ist. Diese Kompensation steht bei automatischen Bremsvorgängen nicht zur Verfügung, weil dabei die beiden Bremskreise voneinander hydraulisch getrennt sind. Vielmehr ist es bei automatischen Bremsvorgängen sowohl bei Bremsanlagen mit einem Bremskreis als auch bei Bremsanlagen mit zwei oder mehr Bremskreisen erforderlich, Störeinflüsse für jeden Bremskreis separat zu kompensieren.

Die Druckschrift DE 195 27 805 A1 offenbart ein Bremssystem für ein Kraftfahrzeug, das einen Hauptzylinder und einen Radbremszylinder zum Bremsen eines Antriebsrades umfasst. Gemäß einer ersten Ausführungsform ist der Radbremszylinder über eine Primär-Fluidpassage mit dem Hauptbremszylinder verbunden. Die Primär-Fluid passage umfasst ein erstes Steuerventil und ein zweites Steuerventil zwischen dem ersten Steuerventil und dem Radbremszylinder. Ein drittes Steuerventil ist in einer Passage vorgesehen, die den Radbremszylinder und einen Behälter miteinander verbindet.

Die Druckschrift WO 01/14193 offenbart eine hydraulische Fahrzeugbremsanlage mit einer Schlupfregeleinrichtung. Die Bremsanlage umfasst einen Hauptbremszylinder, der über eine Hauptbremsleitung mit einem Radbremszylinder über ein Umschaltventil verbunden ist. Dem Radbremszylinder sind ein Druckaufbauventil und ein Druckabsenkventil zugeordnet. Ferner ist eine Pumpe vorgesehen, die eine direkte Verbindung mit dem Hauptbremszylinder besitzt, um einen schnellen Druckaufbau zu erzielen.

Die Druckschrift DE 41 21 470 A1 offenbart ein Bremsdrucksteuersystem für Kraftfahrzeuge. Das System umfasst einen hydraulischen Hauptzylinder, der mit einem elektromagnetischen Differenzdruck-Steuerventil und einem Auslass einer elektrischen Pumpe über Leitungen verbunden ist. Die Pumpe dient zur Erzeugung eines Hydraulikdrucks. Das Steuerventil ist mit einem hydraulischen Radzylinder und einem elektromagnetischen Schaltventil über eine Zweigleitung verbunden.

Die Druckschrift EP 0 696 533 A2 offenbart ein Bremsdruck-Steuersystem für Kraftfahrzeuge. Das System umfasst einen hydraulischen Bremskreis mit hydraulischen

Verbindungen, welche die Radbremszylinder mit Bremsflüssigkeit versorgen. Die hydraulischen Verbindungen weisen Druckaufbau-Steuerventile und Druckabbau-Steuerventile auf und können durch Hauptzylinder-Trennventile unterbrochen werden. Ferner sind hydraulische Pumpen vorgesehen, um einen Bremsdruck zu erzeugen.

### Aufgabe der Erfindung

Aufgabe der Erfindung ist es, bei hydraulischen Bremsanlagen, insbesondere bei automatischen Bremsvorgängen, Störeinflüsse wenigstens teilweise zu kompensieren.

### Kurzbeschreibung der Erfindung

Zur Lösung der obigen Aufgabe stellt die vorliegende Erfindung einen Bremskreis, eine Bremsanlage, eine Steuerung und ein Verfahren gemäß den unabhängigen Ansprüchen bereit.

Der erfindungsgemäße Bremskreis ist für eine hydraulische Bremsanlage eines Landfahrzeugs vorgesehen und umfasst eine erste Radbremse, eine steuerbare Ventileinrichtung, um eine erste hydraulische Verbindung zur Zufuhr von durch einen Fahrer des Landfahrzeugs erzeugtem Bremsdruck herstellen und sperren zu können, eine steuerbare Pumpe, um in dem Bremskreis Bremsdruck gesteuert aufbauen zu können, und eine erste, der ersten Radbremse zugeordnete steuerbare Radbremsenventilanordnung, um Bremsdruckverläufe in der ersten Radbremse steuern zu können.

Bei dem erfindungsgemäßen Bremskreis ist es vorgesehen, in Antwort auf ein Sperren der ersten hydraulischen Verbindung mittels der Ventileinrichtung die erste Radbremsenventilanordnung in einen Betriebszustand zu bringen, der eine erste Hydraulikverbindung zwischen der Ausgangsseite der ersten Radbremse und der Eingangsseite der Pumpe herstellt. Ferner ist es vorgesehen, die Pumpe in einen Betriebszustand zu bringen, der an der Eingangsseite der ersten Radbremse einen vorbestimmten Bremsdruck erzeugt.

Bei einer bevorzugten Ausführungsform umfasst der Bremskreis eine zweite Radbremse und eine zweite, der zweiten Radbremse zugeordnete steuerbare Radbremsenventilanordnung, die zum Steuern von Bremsdruckverläufen in der zweiten Radbremse vorgesehen ist. Bei dieser Ausführungsform weist die zweite Radbremsenventilanordnung in Antwort auf das Sperren der ersten hydraulischen Verbindung einen Betriebszustand auf, der eine zweite Hydraulikverbindung zwischen der Ausgangsseite der zweiten Radbremse und der Eingangsseite der Pumpe sperrt. Dabei erzeugt die Pumpe den vorbestimmten Bremsdruck auch an der Eingangsseite der zweiten Radbremse.

Bei einer anderen Ausführungsform umfasst der Bremskreis ebenfalls eine zweite Radbremse und eine zweite, der zweiten Radbremse zugeordnete steuerbare Radbremsenventilanordnung, die auch zur Steuerung von Bremsdruckverläufen der zweiten Radbremse dient. Allerdings wird hier in Antwort auf das Sperren der ersten hydraulischen Verbindung die zweite Radbremsenventilanordnung in einen Betriebszustand gebracht, der eine zweite Hydraulikverbindung zwischen der Ausgangsseite der zweiten Radbremse und der Eingangsseite der Pumpe sperrt. Auch hier wird der vorbestimmte Bremsdruck von der Pumpe an der Eingangsseite der zweiten Radbremse erzeugt.

Die Pumpe und die wenigstens eine Radbremsenventilanordnung können ihre jeweiligen Betriebszustände in Antwort auf das Sperren der ersten hydraulischen Verbindung im Wesentlichen gleichzeitig einnehmen.

Alternativ ist es vorgesehen, in Antwort auf das Sperren der ersten hydraulischen Verbindung die Pumpe in ihren Betriebszustand zu bringen, bevor die wenigstens eine Radbremsenventilanordnung in ihren Betriebszustand gebracht wird.

Bei einer weiteren Ausführungsform sind, wenn der vorbestimmte Bremsdruck vorliegt, Betriebszustände für die Ventileinrichtung, die Pumpe und die wenigstens eine Radbremsenventilanordnung vorgesehen, die zusammen den vordefinierten Bremsdruck aufrecht halten.

Die Pumpe kann, um den vorbestimmten Bremsdruck zu erzeugen, so betrieben werden, dass ihre Fördermenge in Abhängigkeit des Drucksverlaufs in der wenigstens einen Radbremse geändert wird.

Vorzugsweise umfasst die wenigstens eine Radbremsenventilanordnung jeweils ein erstes steuerbares Ventil, das im geöffnetem Zustand die wenigstens eine Hydraulikverbindung herstellt und einen Staudruck zwischen seiner Eingangsseite und seiner Ausgangsseite zu erzeugen vermag.

Dies kann beispielsweise erreicht werden, wenn das wenigstens eine steuerbare Ventil eine Drossel aufweist, die im geöffneten Ventilzustand wirksam ist

Die wenigstens eine Radbremsenventilanordnung kann ein zweites steuerbares Ventil aufweisen, das nach dem Sperren der ersten hydraulischen Verbindung einen geöffneten Zustand aufweist, um die entsprechende Radbremse eingangsseitig mit Bremsdruck der Pumpe beaufschlagen zu können. -

Die Ventileinrichtung kann ein erstes steuerbares Ventil umfassen, das zum Herstellen und Sperren der ersten hydraulischen Verbindung dient.

Die Ventileinrichtung kann ein zweites steuerbares Ventil aufweisen, das zum Herstellen und Sperren einer zweiten hydraulischen Verbindung dient, um Bremsdruck aus dem Bremskreis abführen oder dies verhindern zu können.

Die erfindungsgemäße hydraulische Bremsanlage ist für ein Landfahrzeug vorgesehen und weist wenigstens einen erfindungsgemäßen Bremskreis auf.

Vorzugsweise umfasst die erfindungsgemäße hydraulische Bremsanlage einen Hauptzylinder, um dem wenigstens einen Bremskreis durch einen Fahrer des Landfahrzeugs erzeugten Bremsdruck zuzuführen, wobei die erste hydraulische(n) Verbindung(en) mit dem Hauptzylinder hergestellt oder gesperrt werden kann (können).

Die Steuerung ist für eine hydraulische Bremsanlage eines Landfahrzeugs vorgesehen, die wenigstens einen Bremskreis mit jeweils wenigstens einer Radbremse, einer steuerbaren Ventileinrichtung zum Herstellen und Sperren einer ersten hydraulischen Verbindung zur Zufuhr von durch einen Fahrer des Landfahrzeugs erzeugtem Bremsdruck, einer steuerbaren Pumpe zum gesteuerten Aufbau von Bremsdruck in dem Bremskreis und einer jeweils der wenigstens einen Radbremse zugeordneten steuerbaren Radbremsenventilanordnung umfasst, um Bremsdruckverläufe in der entsprechenden Radbremse zu steuern.

Die Steuerung ist dazu eingerichtet, in Antwort auf ein Sperren der ersten hydraulischen Verbindung durch die Ventileinrichtung Steuersignale bereitzustellen, durch die wenigstens eine der wenigstens einen Radbremsenventilanordnung einen Betriebszustand einnimmt, der eine erste Hydraulikverbindung zwischen der Ausgangsseite der entsprechenden Radbremse und der Eingangsseite der entsprechenden Pumpe herstellt, und durch die die Pumpe einen Betriebszustand einnimmt, der an der Eingangsseite der wenigstens einen Radbremse einen vorbestimmten Bremsdruck erzeugt.

Hier und im Folgenden ist unter "eingerichtet" zu verstehen, dass die Steuerung wenigstens strukturell ausgeführt ist, um die jeweils angegebenen technischen funktionalen Merkmale bereitzustellen. Darüber hinaus kann die Steuerung auch programmiert sein, um die jeweils angegebenen technischen funktionalen Merkmale bereitzustellen, beispielsweise unter Verwendung von Softwarecode oder Computerprogrammen. So ist es vorgesehen, dass die Funktionen der Steuerung durch eine entsprechende Hardwarestruktur (z. B. ASIC) bereitgestellt werden. Die Steuerung kann auch so ausgeführt sein, dass sie eine auch allgemein verwendbare Hardwarestruktur aufweist, die in Verbindung mit einer entsprechenden Programmierung (z. B. fest implementierter Softwarecode, auf einem computerlesbaren Speichermedium bereitgestelltes Computerprogramm, zum Betrieb herunterladbarer Softwarecode oder Computerprogramm) die technischen funktionalen Merkmale der Steuerung bereitstellt.

Die Steuerung kann in Antwort auf das Sperren der ersten hydraulischen Verbindung die wenigstens eine Pumpe und die wenigstens eine Radbremsenventilanordnung über Steuersignale so steuern, dass sie ihre Betriebszustände im Wesentlichen gleichzeitig einnehmen, oder so steuern, dass die wenigstens eine Pumpe ihren Betriebszustand vor der wenigstens einen Radbremsenventilanordnung einnimmt.

Bei Erreichen des vorbestimmten Bremsdrucks kann die Steuerung die wenigstens eine Ventileinrichtung, die wenigstens eine Pumpe und die wenigstens eine Radbremsenventilanordnung steuern, so dass sie jeweils Betriebszustände einnehmen, die zusammen den vorbestimmten Bremsdruck aufrecht halten.

Vorzugsweise steuert die Steuerung die wenigstens eine Pumpe, damit sie ihren Betriebszustand zum Erzeugen des vorbestimmten Bremsdrucks erreicht, in Abhängigkeit des Druckverlaufs in der wenigstens einen Radbremse.

Das erfindungsgemäße Verfahren ist zur Steuerung einer hydraulischen Bremsanlage eines Landfahrzeugs, die wenigstens einen Bremskreis mit jeweils wenigstens einer Radbremse und einer steuerbaren Pumpe zum gesteuerten Aufbau von Bremsdruck in dem Bremskreis aufweist, vorgesehen.

Bei dem erfindungsgemäßen Verfahren werden der wenigstens eine Bremskreis gegenüber einer Zufuhr von durch eine Fahrer des Landfahrzeugs erzeugtem Bremsdruck gesperrt oder abgeschlossen, eine Hydraulikverbindung zwischen der Ausgangseite wenigstens einer der wenigstens einen Radbremse und der Eingangseite der entsprechenden Pumpe hergestellt und an der Eingangsseite der wenigstens einen Radbremse mittels der entsprechenden Pumpe ein vorbestimmter Bremsdruck erzeugt.

Nach dem Sperren des wenigstens einen Bremskreises kann das Herstellen der wenigstens einen Hydraulikverbindung und das Erzeugen des vorbestimmten Bremsdrucks im Wesentlichen gleichzeitig oder so eingeleitet werden, dass das Erzeugen des vorbestimmten Bremsdrucks vor dem Herstellen der wenigstens eine Hydraulikverbindung beginnt.

Ist der vorbestimmte Bremsdruck erreicht, ist es möglich, den vorbestimmen Bremsdruck aufrecht zu halten.

Vorzugsweise erfolgt das Erzeugen des vorbestimmten Bremsdrucks in Abhängigkeit des Druckverlaufs in der wenigstens einen der wenigstens einen Radbremse.

### Kurzbeschreibung der Zeichnungen

In der folgenden Beschreibung bevorzugter Ausführungsformen wird auf die beigefügten Figuren Bezug genommen, von denen zeigen:
- Fig. 1: eine schematische Darstellung einer erfindungsgemäßen Bremsanlage in ei- nem Betriebszustand für wenigstens teilweise fahrergesteuerte Bremsvor- gänge, und
- Fig. 2: eine schematische Darstellung einer erfindungsgemäßen Bremsanlage in ei- nem Betriebszustand für automatische Bremsvorgänge.

### Beschreibung bevorzugten Ausführungsformen

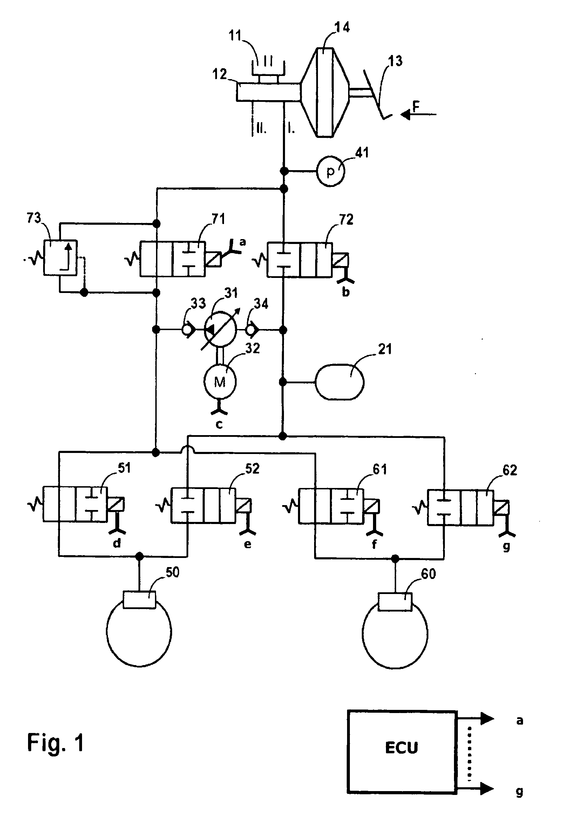

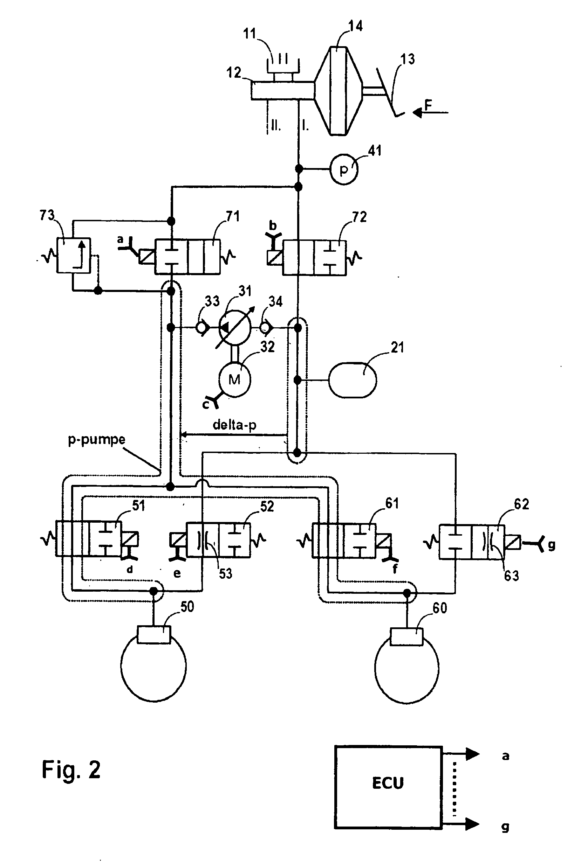

Fig. 1 und 2 zeigen schematische Darstellungen von Bremsanlagen. Die folgenden Ausführungen unter Bezugnahme auf die Ausführungsform von Fig. 1 gelten entsprechend auch für die Ausführungsform von Fig. 2

Die Bremsanlage arbeitet mittels Hydraulikfluid, die zum Teil in einem Behälter 11 bevorratet ist. Zum Erzeugen von Bremsdruck, der durch unter Druck setzen des Hydraulikfluids entsteht, dient ein Hauptzylinder 12, der vom Fahrer durch ein Pedal 13 betätigt werden kann. Wie in den Figuren dargestellt, kann optional ein zwischen dem Hauptzylinder 12 und dem Pedal 13 angeordneter Bremskraftverstärker 14 vorgesehen sein, um eine vom Fahrer eingeleitete Kraft F - vorzugsweise pneumatisch oder hydraulisch - zu verstärken.

Von dem Hauptzylinder 12 ausgehend werden ein erster und zweiter Bremskreis I., II. versorgt, wobei jeder Bremskreis zwei Radbremsen umfasst. Je nachdem, welche Radbremsen des Fahrzeugs von welchem Bremskreis umfasst werden, ergibt sich eine Aufteilung zwischen Vorder- und Hinterachse, wobei ein Bremskreis Radbremsen der Vorderachse und der andere Bremskreis Radbremsen der Hinterachse umfassen kann oder ein Bremskreis die Radbremse eines Vorderrades und die Radbremse des diagonal gegenüberliegenden Hinterrades und der andere Bremskreis die Radbremsen des anderen Vorderrades und des anderen Hinterrades umfassen kann.

Im Folgenden wird davon ausgegangen, dass die Bremskreise I. und II. im Wesentlichen identisch aufgebaut sind. Daher ist nur der Bremskreis I. im Detail gezeigt. Die folgenden Ausführungen unter Bezugnahme auf den Bremskreis I. gelten entsprechend für den Bremskreis II.

Der Bremskreis I. umfasst zwei Radbremsen 50 und 60. Zum Steuern von Bremsdruckverläufen in den Radbremsen 50 und 60 sind eine Ventile 51 und 52 umfassende erste Ventilanordnung und eine Ventile 61 und 62 umfassende zweite Ventilanordnung vorgesehen.

Die Ventile 51, 52, 61 und 62 sind hier als durch Elektromagnete betätigbare 2/2-Wegeventile dargestellt.

Der Bremskreis I. umfasst eine Ventile 71, 72 und 73 aufweisende Ventileinrichtung. Die Ventile 71 und 72 sind hier als durch Elektromagnete betätigbare 2/2-Wegeventile dargestellt.

Fig. 1 zeigt die Ventile 51, 61 und 71 jeweils in einem geöffneten Betriebszustand oder Durchflussstellung, während die Ventile 52, 62 und 72 jeweils in einem geschlossenen Betriebszustand oder Sperrstellung gezeigt sind. Diese Betriebszustände oder Stellungen werden im Folgenden auch als Grundstellung bezeichnet.

Bei dem in Fig. 1 dargestellten Betriebszustand des Bremskreises I. besteht aufgrund des geöffneten Betriebszustandes des Ventils 71 eine hydraulische Verbindung zwischen dem Hauptzylinder 12 und den Radbremsen 50 und 60. Dieser Betriebszustand wird für über Betätigungen des Pedals 13 steuerbare Bremsvorgänge, die auch als Normalbremsvorgänge bezeichnet werden können, verwendet. Betätigungen des Hauptzylinders 12 mittels des Pedals 13, optional unter Mitwirkung des Bremskraftverstärkers 14, erzeugen Bremsdrücke in dem Bremskreis I. und damit in den Radbremsen 50 und 60.

Die gezeigte Bremsanlage ist für eine sogenannte Antiblockierregelung ausgelegt, bei der während eines Bremsvorgangs ein Blockieren der Räder verhindert werden soll. Hierfür werden in den Radbremsen 50 und 60 wirkenden Bremsdrücke individuell moduliert. Dies geschieht durch Einstellen in zeitlicher Folge wechselnder Druckaufbau-, Druckhalte- und Druckabbauphasen, die im Folgenden detaillierter erläutert sind.

Die Druckaufbau-, -halte- und -abbauphasen werden durch geeignete Steuerung der den Radbremsen 50 und 60 zugeordneten Ventile 51, 52 bzw. 61, 62 mittels einer elektronischen Steuerung ECU erreicht.

Die elektronische Steuerung ECU kann über eine Reihe von nicht dargestellten Eingängen Betriebszustände eines Fahrzeugs angebende Signale empfangen. Beispielsweise ist es vorgesehen, der elektronischen Steuerung ECU Signale von Raddrehzahlsensoren, Giergeschwindigkeitssensoren, Querbeschleunigungssensoren etc. zuzuführen.

Die elektronische Steuerung ECU weist Ausgänge für Steuersignale a, ... , g zur Steuerung der Ventile 51, 52, 61, 62, 71, und 72 sowie zur Steuerung eines zum Betrieb einer Pumpe 31 vorgesehenen Motors 32 auf.

Bei einem fahrergesteuerten normalen Bremsvorgang mit Antiblockierregelung erfolgt die Steuerung durch die elektronische Steuerung ECU in Abhängigkeit von Betriebszustände des Fahrzeugs angebenden Messgrößen (z. B. Geschwindigkeit, Beschleunigung, Raddrehzahlen, Giergeschwindigkeit, Querbeschleunigung etc.) und Messgrößen, die einen durch den Fahrer gewünschten Bremsvorgang angeben (z. B. Betätigung des Pedals 13, Hydraulikdruck am Ausgang des Hauptzylinders 12 etc.). Der vom Fahrer gewünschte Bremsvorgang kann auch über den im Hauptzylinder 12 erzeugten Bremsdruck P ermittelt werden, für dessen Erfassung ein Sensor 41 vorgesehen ist.

Während eines normalen Bremsvorgangs ohne Antiblockierregelung befinden sich die Ventile 51, 52 und 61, 62 jeweils in ihren Grundstellungen. Stellt die elektronische Steuerung ECU beispielsweise fest, dass den Radbremsen 50 und 60 zugeordnete Rädern zum Blockieren neigen oder blockieren, bewirkt die elektronische Steuerung ECU für die Radbremsen 50 und 60 jeweils eine Druckhaltephase. Führen die Druckhaltephasen nicht dazu, dass die Blockierneigung bzw. das Blockieren endet, bewirkt die elektronische Steuerung ECU für die Radbremsen 50 und 60 jeweils eine Druckabbauphase so lange bis die Blockierneigung bzw. das Blockieren beendet ist. Danach folgen unter Steuerung der elektronischen Steuerung ECU Druckaufbauphasen für die Radbremsen 50 und 60, in denen die in den Radbremsen 50 und 60 wirkenden Bremsdrücke gemäß dem vom Fahrer gewünschten Bremsvorgang aufgebaut werden.

Während der Druckhaltephasen werden unter Steuerung der elektronischen Steuerung ECU die Ventile 51 und 61 jeweils in eine geschlossene Betriebsposition oder Sperrstellung gebracht. Die Ventile 52 und 62 bleiben dabei in ihren beim normalen Bremsvorgang vorliegenden Grundstellungen.

Das Schließen der Ventile 51 und 61 führt zu einer hydraulischen Abkopplung der Radbremsen 50 und 60, wodurch die in den Radbremsen 50 und 60 wirkenden Bremsdrücke konstant gehalten werden.

Während der Druckabbauphasen werden die Ventile 51 und 61 in ihren geschlossenen Betriebspositionen gehalten und die Ventile 52 und 62 von der elektronischen Steuerung ECU so angesteuert, dass sie jeweils einen geöffneten Betriebszustand oder Durchflussstellung annehmen. Aufgrund der geöffneten Ventile 52 und 62 kann Hydraulikfluid aus den Radbremsen 50 und 60 abfließen, wodurch die in den Radbremsen 50 und 60 wirkenden Bremsdrücke verringert werden. Dabei abfließendes Hydraulikfluid kann in einem Niederdruckspeicher 21 zwischengespeichert werden.

Während einer Druckaufbauphase nehmen die Ventile 51, 52 und 61 und 62 ihre Grundsstellungen ein, dass heißt die Ventile 51 und 61 werden durch die elektronische Steuerung ECU geöffnet, während die Ventile 52 und 62 geschlossen werden. Zur Erhöhung der in den Druckabbauphasen verringerten Bremsdrücken in den Radbremsen 50 und 60 steuert die elektronische Steuerung ECU den Motor 32 und damit die Pumpe 31 so an, dass über die Ventile 51 und 61 die in den Radbremsen 50 und 60 wirkenden Bremsdrücke auf dem vom Fahrer gewünschten Bremsvorgang entsprechende Niveaus erhöht werden. Dabei fördert die Pumpe 31 in den Druckabbauphasen abgeflossenes Hydraulikfluid, gegebenenfalls aus dem Niederdruckspeicher 21, zurück.

Die z. B. als Radialkolbenpumpe ausgeführte Pumpe 31 ist entgegen ihrer Förderrichtung sperrend, beispielsweise mittels eines Sperrventils 33 am Ausgang der Pumpe 31 und eines Sperrventils 34 am Eingang der Pumpe 31.

Die Drehzahl des Elektromotors 32 ist über das Steuersignal c der elektronischen Steuerung ECU einstell- bzw. regelbar, wodurch die Fördermenge der Pumpe 31 gesteuert werden kann. Der Elektromotor 32 kann gleichzeitig eine hier nicht gezeigte Pumpe des zweiten Bremskreises II. betätigen.

Automatische Bremsvorgänge erfolgen in der Regel unabhängig von einer vom Fahrer am Pedal 13 eingeleiteten Kraft F. Solche sind z. B. eine Antriebsschlupfregelung (ASR), die ein Durchdrehen einzelner Räder bei einem Anfahrvorgang durch gezieltes Abbremsen verhindert, eine Fahrdynamikregelung (ESP), die das Fahrzeugverhalten im Grenzbereich durch gezieltes Abbremsen einzelner Räder an den Fahrerwunsch und die Fahrbahnverhältnisse anpasst, oder eine adaptive Geschwindigkeitsregelung (ACC), die durch unter anderem selbsttätiges Bremsen einen Abstand des eigenen Fahrzeugs zu einem vorausfahrenden Fahrzeug einhält.

Für einen automatischen Bremsvorgang werden die Ventile 71 und 72 durch die elektronischen Steuerungen ECU so angesteuert, dass das Ventil 71 einen geschlossenen Betriebszustand oder eine Sperrstellung und das Ventil 72 einen offenen Betriebszustand oder eine Durchflussstellung einnehmen. Die Ventile 51, 52, 61 und 62 bleiben dabei in ihren Grundstellungen. Aufgrund des geschlossenen Ventils 71, der geöffneten Ventile 51 und 61 und der geschlossenen Ventile 52 und 62 sind die Radbremsen 50 und 60 insofern von dem Hauptzylinder 12 bzw. dem Bremskreis II. abgekoppelt, dass keine von außen zugeführten Bremsdrücke, das heißt durch Betätigung des Pedals 13 bewirkte Bremsdrücke, zugeführt werden können. Auch das geöffnete Ventil 72 erlaubt keine Zufuhr von externem Bremsdruck, weil die Ventile 52 und 62 geschlossen sind und die Pumpe 31 ebenfalls wie ein geschlossenes Ventil wirkt. Das geöffnete Ventil 72 ermöglicht es allerdings der Pumpe 31, Hydraulikfluid auch aus dem Behälter 11 anzusaugen, um, wie im Folgenden detailliert beschrieben, Bremsdrücke in den Radbremsen 50 und 60 zu erzeugen.

Um für automatische Bremsvorgänge gewünschte Bremskräfte in den Radbremsen 50 und 60 zu erzeugen, steuert die elektronische Steuerung ECU den Motor 32 bzw. die Pumpe 31 entsprechend. Zum Modulieren oder für eine Feineinstellung der Bremsdrücke in den Radbremsen 50 und 60 kann die elektronische Steuerung ECU die Ventile 51, 52 bzw. 61, 62 vergleichbar zu der oben beschriebenen Antiblockierregelung steuern.

Um Beschädigungen des Bremskreises I. zu vermeiden, kann das Ventil 73 in Form eines Druckbegrenzungsventils vorgesehen sein. Das Ventil 73, das sich normalerweise in einem geschlossenen Betriebszustand befindet, nimmt einen Bremsdruck abbauenden, geöffneten Betriebszustand ein, wenn am Ausgang der Pumpe 31 zu hoher Druck vorliegt.

Automatische Bremsvorgänge finden im Allgemeinen bei geringen Bremsdrücken statt. Dabei können sich Störeinflüsse, die zu unterschiedlichen Bremswirkungen an Rädern führen können, besonders negativ auswirken. Derartige Störeinflüsse werden bei normalen Bremsvorgängen wenigstens teilweise dadurch kompensiert, dass zwischen den Bremskreisen I. und II. eine hydraulische Verbindung besteht, die für einen Druckausgleich im Hauptzylinder 12 nach dem Schwimmkolben-Prinzip sorgt. Dies ist bei automatischen Bremsvorgängen aufgrund des geschlossenen Ventils 71 des Bremskreises I. und eines entsprechenden, ebenfalls geschlossenen Ventils des Bremskreises II. nicht möglich.

Um auch bei automatischen Bremsvorgängen solche Störeinflüsse zu beseitigen, sind bei den Ventilen 52 und 62, wie in Fig. 2 dargestellt, Drosseln 53 bzw. 63 vorgesehen. Die Drosseln 53 und 63 sind wirksam, wenn sich die Ventile 52 bzw. 62 in ihren geöffneten Betriebsstellungen bzw. Durchflussstellungen befinden.

Zusätzlich zu den im Folgenden beschriebenen Funktionen der Drosseln 53 und 63 können diese, beispielsweise bei der oben beschriebenen Modulation von Bremsdrücken in den Radbremsen 50 und 60, für eine fahrzeugspezifische Anpassung von Charakteristika der Bremsanlage, wie zum Beispiel Ventilansteuerzeiten, an Hydraulikfluidaufnahmekapazitäten der Radbremsen 50 und 60 sorgen.

Im Zusammenhang mit automatischen Bremsvorgängen werden insbesondere die "Staudruck-Effekte" genutzt, die sich an den Drosseln 53 und/oder 63 einstellen können, wenn die elektronische Steuerung ECU die Bremsanlage für einen automatischen Bremsvorgang so steuert, dass das Ventil 71 seinen geschlossenen Betriebszustand (Sperrstellung) einnimmt, das Ventil 72 seinen geöffneten Betriebszustand (Durchflussstellung) einnimmt, die Pumpe 31 bzw. der Motor 32 zum Druckaufbau betätigt werden (können), die Ventile 51 und 61 ihre geöffneten Betriebszustände (Durchflussstellungen) einnehmen und wenigstens eines der Ventile 52 und 62 einen geöffneten Betriebszustand (Durchflussstellung) einnimmt.

Eine Ausführungsform, bei der das Ventil 52 in seinem geöffneten Betriebszustand eine (erste) Hydraulikverbindung zwischen der Ausgangsseite der Radbremse 50 und der Eingangseite der Pumpe 31 herstellt, ist in Fig. 2 gezeigt.

Aufgrund eines Staudruck-Effekts an der Drossel 53 des Ventils 52 wird über der Pumpe 31, das heißt zwischen deren Eingang und Ausgang (nicht bezeichnet), eine Druckdifferenz
delta-p erzeugt. Infolgedessen entsteht ausgangsseitig der Pumpe 31 und damit in den Radbremsen 50 und 60 ein Bremsdruck p-pumpe. Der Bremsdruck p-pumpe hängt unter anderem von der Fördermenge der Pumpe 31 und der Drosselcharakteristik der Drossel 53 (z. B. Abmessung/Durchmesser des Durchlassbereichs der Drossel 53) ab.

Die Fördermenge der Pumpe 31 kann unter Steuerung der elektronischen Steuerung ECU über die Drehzahl des Motors 32 eingestellt werden, um einen vorbestimmten Bremsdruck
p-pumpe zu erzeugen. Dabei ist es vorgesehen, den Bremsdruck p-pumpe so festzulegen, dass insbesondere Störeinflüsse der genannten Art bei automatischen Bremsvorgängen kompensiert werden.

Aufgrund des geöffneten Ventils 52 hat die Pumpe 31, verglichen mit einem Betriebszustand der Bremsanlage, in dem das Ventil 52 geschlossen ist, eine höhere Förderleistung, um den gleichen ausgangsseitigen Druck zu erzeugen. Dadurch wird erreicht, dass ungünstige Charakteristika der Bremsanlage und insbesondere der Pumpe 31 bei niedriger Förderleistung, um bei einem geschlossenen Ventil 52 für automatische Bremsvorgänge niedrige Bremsdrücke zu erzeugen, vermieden werden. Demgegenüber ermöglicht es die Ausführungsform von Fig. 2, die Pumpe 31 in einem Betriebsbereich zu betreiben und zu steuern, in dem auch kleine Druckänderungen genau eingestellt werden können.

Allgemein erfolgt die Steuerung der Pumpe 31 bzw. des Motors 32 durch die elektronische Steuerung ECU so, dass je größer die Drosselwirkung der Drossel 53 ist (kleine effektive Durchlassöffnung), desto kleiner die Drehzahl des Elektromotors 32 bzw. die Fördermenge der Pumpe 31 eingestellt werden kann, während größere Drehzahlen des Elektromotors 32 bzw. höhere Fördermengen der Pumpe 31 vorgesehen sind, wenn eine geringere Drosselwirkung der Drossel 53 (größere effektive Durchlassöffnung) vorliegt.

Ferner kann bei den hier angenommen Bremsanlagen mit zwei Bremskreisen eine Kompensation von Störeinflüssen über das geöffnete Ventil 72 des Bremskreises I. und/oder eines entsprechenden, ebenfalls geöffneten Ventils des Bremskreises II. erreicht werden. Aufgrund dieser geöffneten Ventile besteht eine hydraulische Verbindung der Bremskreise I. und II. zu dem Hauptzylinder 12. Dies kann einen Druckausgleich zwischen den Bremskreisen I. und II. nach dem Schwimmkolben-Prinzip ermöglichen. Bei Bremsanlagen mit nur einem Bremskreis oder bei Bremsanlagen, deren Bremskreise nicht hydraulisch koppelbar sind, erfolgt die Kompensation von Störeinflüssen auf die zuvor beschriebene Art und Weise.

Bei einer anderen, nicht gezeigten Ausführungsform wird anstelle des Ventils 52, das hier geschlossen bleibt, das Ventil 62 durch das Steuersignal g der elektronischen Steuerung ECU in einen geöffneten Betriebszustand (Durchflussstellung) gebracht, in dem eine (zweite) Hydraulikverbindung zwischen der Ausgangsseite der Radbremse 60 und der Eingangseite der Pumpe 31 hergestellt wird, und der Staudruck-Effekt an der Drossel 63 wird zum Aufbau einer Druckdifferenz delta-p zwischen der Eingangsseite und der Ausgangsseite der Pumpe 31 genutzt. Ansonsten entspricht diese Ausführungsform der zuvor beschriebenen Ausführungsform.

Bei einer weiteren, ebenfalls nicht gezeigten Ausführungsform steuert die elektronische Steuerung ECU die Ventile 52 und 62 über die Steuersignale e bzw. g so an, dass sowohl das Ventil 52 als auch das Ventil 62 in einen geöffneten Betriebszustand (Durchflussstellung) gebracht werden. In diesem Fall entsteht eine Druckdifferenz delta-p zwischen der Eingangsseite und der Ausgangsseite der Pumpe 31 aufgrund von Staudruck-Effekten sowohl an der Blende 53 als auch an der Blende 63. Ansonsten gelten die obigen Ausführungen auch für diese Ausführungsform. Der Betriebszustand der Bremsanlage, bei der die Ventile 52 und 62 geöffnet sind, der auch als Parallelschaltung der Drosseln 53 und 63 bezeichnetet werden kann, ist beispielsweise vorteilhaft, wenn die Drosseln 53 und 63 unterschiedlich dimensioniert sind (z. B. unterschiedliche Drosselcharakteristika aufweisen) und/oder der Bremskreis I. in einer Bremsanlage mit diagonaler Aufteilung verwendet wird. Unterschiedlich dimensionierte Blenden 53 und 63 können beispielsweise verwendet werden, wenn die Radbremsen 50 und 60 unterschiedliche Volumenaufnahmekapazitäten für Hydraulikfluid in Abhängigkeit davon aufweisen, ob sie einem Vorderrad oder einem Hinterrad zugeordnet sind.

Im Fall einer Bremsanlage mit diagonaler Aufteilung, bei der beispielsweise der Bremskreis I. mit der Radbremse 50 ein Vorderrad und mit der Radbremse 60 ein diagonal gegenüberliegendes Hinterrad abbremsen kann, ist es vorteilhaft, wenn die Bremskreise I. und II. von der elektronischen Steuerung ECU im Wesentlichen zeitgleich und im Wesentlichen auf gleiche Art und Weise gesteuert werden. Insbesondere ist es hier vorgesehen, dass die elektronische Steuerung ECU die Ventile 51 und 61 des Bremskreises I. und die entsprechenden Ventile des Bremskreises II. im Wesentlichen zeitgleich öffnet, wenigstens eines der Ventile 52 und 62 des Bremskreises I. und wenigstens eines der entsprechenden Ventile des Bremskreises II. im Wesentlichen zeitgleich öffnet und die Pumpe 31 des Bremskreises I. und die entsprechende Pumpe des Bremskreises II. so steuert, dass der vordefinierte Bremsdruck p-pumpe im Bremskreis I. und ein vergleichbarer vordefinierter Bremsdruck im Bremskreis II. im Wesentlichen zeitgleich erzeugt werden.

Bei einer weiteren Ausführungsform steuert die elektronische Steuerung ECU das Ventil 52 und/oder das Ventil 62 über das Steuersignal e bzw. das Steuersignal g so an, dass das Ventil 52 und/oder das Ventil 62 mit zeitlicher Verzögerung geöffnet wird/werden, nachdem die Ventile 51, 61 und 72 geöffnet und das Ventil 71 geschlossen worden sind. Bei dieser Ausführungsform kann die elektronische Steuerung ECU die Pumpe 31 so steuern, dass bei geschlossenen Ventilen 52 und/oder 62 der vorbestimmte Bremsdruck p-pumpe erzeugt oder zumindest annähernd eingestellt wird. Danach wird das Ventil 52 und/oder das Ventil 62 geöffnet, wodurch ein Staudruck-Effekt an der Drossel 53 und/oder ein Staudruckeffekt an der Drossel 63 für eine Druckdifferenz delta-p zwischen der Eingangsseite und der Ausgangsseite der Pumpe 31 sorgt. Dies bewirkt, dass Störeinflüsse, die es bei geschlossenen Ventilen 52 und/oder 62 erschweren oder unmöglich machen, den vorbestimmen Bremsdruck p-pumpe einzustellen, kompensiert werden. Wird beispielsweise bei geschlossenen Ventilen 52 und/oder 62 ein verglichen mit dem vorbestimmten Bremsdruck p-pumpe zu hoher oder zu niedriger Bremsdruck erzeugt, bewirkt eine Öffnung des Ventils 52 und/oder des Ventils 62 eine Korrektur des in den Radbremsen 50 und 60 wirkenden Bremsdrucks auf den vorbestimmen Bremsdruck p-pume.

Bei allen Ausführungsformen ist es vorgesehen, nach Erzeugung des vorbestimmten Bremsdrucks p-pumpe die elektronische Steuerung ECU so zu betreiben, dass die Ventile 51 und 61 geöffnet bleiben, das Ventil 71 geschlossen bleibt und die Ventile 52, 62 und 72 geschlossen werden. Auf diese Weise wird der Bremskreis I. unabhängig davon, wie zuvor der vorbestimmte Bremsdruck p-pumpe eingestellt worden ist, aus einem dynamischen Betrieb in einen statischen Betrieb gebracht. Der aufgrund von Staudruck-Effekten zuvor dynamisch eingestellte, vorbestimmte Bremsdruck p-pumpe bleibt dann als statischer Bremsdruck im Bremskreis I. bzw. den Radbremsen 50 und 60 erhalten. Dieser Zustand kann als "Bereitschaftszustand" bezeichnet werden, der einen vordefinierten Ausgangszustand der Bremsanlage darstellt, von dem aus ausgehend automatische Bremsvorgänge präziser durchgeführt werden können.

## Patentansprüche

1. Bremskreis für eine hydraulische Bremsanlage für ein Landfahrzeug, mit:
- einer ersten Radbremse (50),
- einer Steuerung (ECU), die eingerichtet ist, Steuersignale (a, ..., g) zur Steuerung automatischer Bremsvorgänge der Bremsanlage bereitzustellen,
- einer steuerbaren Ventileinrichtung (71, 72, 73) zum Herstellen und Sperren einer ersten hydraulischen Verbindung zur Zufuhr von durch einen Fahrer des Landfahrzeugs erzeugtem Bremsdruck zu dem Bremskreis,
- einer steuerbaren Pumpe (31) zum gesteuerten Aufbau von Bremsdruck in dem Bremskreis, und
- einer ersten, der ersten Radbremse (50) zugeordneten steuerbaren Radbremsenventilanordnung (51, 52) zum Steuern des Bremsdruckverlaufs in der ersten Radbremse (50), wobei die Radbremsenventilanordnung ein erstes steuerbares Ventil (52, 62) mit einer im geöffneten Ventilzustand wirksamen Drossel (53, 63) umfasst,
wobei in Antwort auf ein Sperren der ersten hydraulischen Verbindung durch die Steuerung (ECU) mittels der steuerbaren Ventileinrichtung (71, 72, 73) die Steuerung (ECU) die Radbremsenventilanordnung (51,52) und die Pumpe (31) so ansteuert, dass
- die erste Radbremsenventilanordnung (51, 52) einen Betriebszustand einnimmt, der eine erste Hydraulikverbindung
-- zwischen der Ausgangsseite der ersten Radbremse (50) und der Eingangsseite der Pumpe (31) sowie
-- zwischen der Ausgangsseite der Pumpe (31) und der Eingangsseite der ersten Radbremse (50) herstellt und
an der Drossel (53, 63) die Erzeugung eines Staudrucks ermöglicht,
- die Pumpe (31) einen Betriebszustand einnimmt, der an der Eingangsseite der ersten Radbremse (50) einen vorbestimmten Bremsdruck (p-pumpe) und an der Drossel (53, 63) einen Staudruck erzeugt, und
- nach Erzeugung des vorbestimmten Bremsdrucks (p-pumpe) dieser **dadurch** gehalten wird, dass die Radbremsenventilanordnung (51, 52) einen Betriebszustand einnimmt, in dem
-- die Hydraulikverbindung zwischen der Ausgangsseite der Pumpe (31) und der Eingangsseite der ersten Radbremse (50) herstellt ist und
-- die Hydraulikverbindung zwischen der Ausgangsseite der Radbremse (50) und der Eingangsseite der Pumpe (31) gesperrt ist.

2. Bremskreis nach Anspruch 1, mit:
- einer zweiten Radbremse (60), und
- einer zweiten, der zweiten Radbremse (60) zugeordneten steuerbaren Radbremsenventilanordnung (61, 62) zum Steuern des Bremsdruckverlaufs in der zweiten Radbremse (60),
wobei in Antwort auf das Sperren der ersten hydraulischen Verbindung die Steuerung (ECU) die zweite Radbremsenventilanordung (61, 62) und die Pumpe (31) so ansteuert, dass
- die zweite Radbremsenventilanordnung (61, 62) einen Betriebszustand einnimmt, der eine zweite Hydraulikverbindung zwischen der Ausgangsseite der zweiten Radbremse (60) und der Eingangsseite der Pumpe (31) herstellt, und
- die Pumpe (31) den vordefinierten Bremsdruck (p-pumpe) auch an der Eingangsseite der zweiten Radbremse (60) erzeugt.

3. Bremskreis nach einem der Ansprüche 1 oder 2, bei dem die Steuerung (ECU) die Pumpe (31) und die wenigstens eine Radbremsenventilanordnung (51, 52; 61, 62) so ansteuert, dass die Pumpe (31) und die wenigstens eine Radbremsenventilanordnung (51, 52; 61, 62) ihre Betriebszustände in Antwort auf das Sperren der ersten hydraulischen Verbindung im Wesentlichen gleichzeitig einnehmen.

4. Bremskreis nach einem der Ansprüche 1 oder 2, bei dem in Antwort auf das Sperren der ersten hydraulischen Verbindung durch die Steuerung (ECU) mittels der steuerbaren Ventileinrichtung (71, 72, 73) die Steuerung (ECU) die Pumpe (31) so ansteuert, dass diese ihren Betriebszustand einnimmt, bevor die wenigstens eine Radbremsenventilanordnung (51, 52; 61, 62) ihren Betriebszustand einnimmt.

5. Bremskreis nach einem der vorherigen Ansprüche, bei dem die Steuerung (ECU) zum Erzeugen des vorbestimmten Bremsdrucks (p-pumpe) die Fördermenge der Pumpe (31) in Abhängigkeit des Druckverlaufs in der wenigstens einen Radbremse (50; 60) ändert.

6. Bremskreis nach Anspruch 1, bei dem die wenigstens eine Radbremsenventilanordnung (51, 52; 61, 62) jeweils ein zweites steuerbares Ventil (51; 61) umfasst, das in Antwort auf das Sperren der ersten hydraulischen Verbindung durch die Steuerung (ECU) mittels der Steuerbaren Ventileinrichtung (71, 72, 73) durch die Steuerung (ECU) derart angesteuert wird, dass es eine Hydraulikverbindung zwischen der Ausgangsseite der Pumpe (31) und der Eingangsseite der entsprechenden Radbremse (50; 60) herstellt.

7. Bremskreis nach einem der vorherigen Ansprüche, bei dem die steuerbare Ventileinrichtung (71, 72, 73) ein erstes steuerbares Ventil (71) umfasst, das im geöffneten Zustand die erste hydraulische Verbindung herstellt und im geschlossenen Zustand die erste hydraulische Verbindung sperrt.

8. Bremskreis nach Anspruch 7, bei dem die Ventileinrichtung (71, 72, 73) ein zweites steuerbares Ventil (72) umfasst, das im geöffneten Zustand eine zweite hydraulische Verbindung zur Abfuhr von Bremsdruck aus dem Bremskreis herstellt und im geschlossenen Zustand die zweite hydraulische Verbindung sperrt.

9. Hydraulische Bremsanlage für ein Landfahrzeug, mit wenigstens einem Bremskreis (I., II.) gemäß einem der Ansprüche 1 bis 8.

10. Hydraulische Bremsanlage nach Anspruch 9, mit einem Hauptzylinder (14) zum Erzeugen eines von einem Fahrer des Landfahrzeugs erzeugten Bremsdrucks, wobei die wenigstens eine steuerbare Ventileinrichtung (71, 72, 73) des wenigstens einen Bremskreises die jeweilige erste hydraulische Verbindung mit dem Hauptzylinder (14) herstellt oder sperrt.

11. Verfahren zur Steuerung einer hydraulische Bremsanlage für ein Landfahrzeug mit wenigstens einem Bremskreis (I.; II.), der
- jeweils wenigstens eine Radbremse (50; 60),
- eine der wenigstens einen Radbremse (50, 60) zugeordnete steuerbare Radbremsenventilanordnung (51, 52, 53) zum Steuern des Bremsdruckverlaufs in der wenigstens einen Radbremse (50) und
- eine steuerbare Pumpe (31) zum gesteuerten Aufbau von Bremsdruck in dem Bremskreis umfasst,
wobei die Radbremsenventilanordnung ein erstes steuerbares Ventil (52; 62) mit einer im geöffneten Ventilzustand wirksamen Drossel (53; 63) umfasst und wobei das Verfahren folgende Schritte aufweist:
- Sperren des wenigstens einen Bremskreises (I., II.) gegenüber einer Zufuhr von durch einen Fahrer des Landfahrzugs erzeugtem Bremsdruck,
- Herstellen einer Hydraulikverbindung zwischen der Ausgangseite wenigstens einer der wenigstens einen Radbremse (50; 60) und der Eingangsseite der entsprechenden Pumpe (31) und zwischen der Ausgangsseite der Pumpe (31) und der Eingangsseite der ersten Radbremse (50) durch Öffnen des ersten steuerbaren Ventils (52; 62), wodurch eine Erzeugung eines Staudrucks an der Drossel (53, 63) ermöglicht wird,
- Erzeugen eines vorbestimmten Bremsdrucks (p-pumpe) an der Drossel (53, 63) mittels der entsprechenden Pumpe (31)
- nach Erzeugung des vorbestimmten Bremsdrucks (p-pumpe), Halten des vorbestimmten Bremsdrucks (p-pumpe) **dadurch**, dass
-- das erste steuerbare Ventil (52, 62) geöffnet wird und
-- die Hydraulikverbindung zwischen der Ausgangsseite der Radbremse (50) und der Eingangsseite der Pumpe (31) gesperrt wird.

12. Verfahren nach Anspruch 11, bei dem nach dem Sperren des wenigstens einen Bremskreises (I.; II.) das Herstellen der Hydraulikverbindung und das Erzeugen des vorbestimmten Bremsdrucks (p-pumpe) im Wesentlichen gleichzeitig eingeleitet wird.

13. Verfahren nach Anspruch 11, bei dem nach dem Sperren des wenigstens einen Bremskreises (I.; II.) das Erzeugen des vorbestimmten Bremsdrucks (p-pumpe) vor dem Herstellen der Hydraulikverbindung eingeleitet wird.

14. Verfahren nach einem der Ansprüche 11 bis 13, bei dem der vorbestimmte Bremsdruck (p-pumpe) in Abhängigkeit des Druckverlaufs in der wenigstens einen Radbremse (50; 60) erzeugt wird.

## Claims

1. Brake circuit for a hydraulic brake system for a land vehicle, having:
- a first wheel brake (50),
- a control unit (ECU) devised to supply control signals (a, ..., g) for the control of automatic braking operations,
- a controllable valve device (71, 72, 73) for establishing and blocking a first hydraulic connection for supplying brake pressure generated by a driver of the land vehicle to the brake circuit,
- a controllable pump (31) for the controlled build-up of brake pressure in the brake circuit, and
- a first controllable wheel-brake valve arrangement (51, 52) associated with the first wheel brake (50) for controlling the brake pressure characteristic in the first wheel brake (50), wherein the wheel-brake valve arrangement comprises a first controllable valve (52; 62) having a throttle (53; 63) that is effective in the open valve state,
wherein in response to a blocking of the first hydraulic connection by the control unit (ECU) by means of the controllable valve device (71, 72, 73), the control unit (ECU) controls the wheel-brake valve arrangement (51, 52) and the pump (31) in such a way, that
- the first wheel-brake valve arrangement (51, 52) adopts an operating state that establishes a first hydraulic connection
-- between the output side of the first wheel brake (50) and the input side of the pump (31), and
-- between the output side of the pump (31) and the input side of the first wheel brake (50), and
- the generation of back-pressure is enabled at the throttle (53; 63),
- the pump (31) adopts an operating state that generates a predetermined brake pressure (p-pump) at the input side of the first wheel brake (50) and a back-pressure at the throttle (53; 63), and
- after the generation of the predetermined brake pressure (p-pump), the brake pressure (p-pump) is thereby maintained, that the wheel-brake valve arrangement (51, 52) adopts an operating state in which
-- the hydraulic connection is established between the output side of the pump (31) and the input side of the first wheel brake (50) and
-- the hydraulic connection is blocked between the output side of the first wheel brake (50) and the input side of the pump (31).

2. Brake circuit according to claim 1, having:
- a second wheel brake (60), and
- a second controllable wheel-brake valve arrangement (61, 62) associated with the second wheel brake (60) for controlling the brake pressure characteristic in the second wheel brake (60),
wherein in response to the blocking of the first hydraulic connection, the control unit (ECU) controls the second wheel-brake valve arrangement (51, 52) and the pump (31) in such a way, that
- the second wheel-brake valve arrangement (61, 62) adopts an operating state that establishes a second hydraulic connection between the output side of the second wheel brake (60) and the input side of the pump (31), and
- the pump (31) generates the predefined brake pressure (p-pump) also at the input side of the second wheel brake (60).

3. Brake circuit according to one of claims 1 or 2, in which the control unit (ECU) controls the pump (31) and the at least one wheel-brake valve arrangement (51, 52; 61, 62) in such way, that the pump (31) and the at least one wheel-brake valve arrangement (51, 52; 61, 62) adopts their operating states in response to the blocking of the first hydraulic connection substantially simultaneously.

4. Brake circuit according to one of claims 1 or 2, in which in response to the blocking of the first hydraulic connection by the control unit (ECU) by means of the controllable valve device (71, 72, 73), the control unit (ECU) controls the pump (31) in such a way, that the pump (31) adopts its operating state before the at least one wheel-brake valve arrangement (51, 52; 61, 62) adopts its operating state.

5. Brake circuit according to one of the preceding claims, in which the control unit (ECU) changes the delivery rate of the pump (31) in dependence upon the pressure characteristic in the at least one wheel brake (50; 60) for generating the predetermined brake pressure (p-pump).

6. Brake circuit according to claim 1, in which the at least one wheel-brake valve arrangement (51, 52; 61, 62) comprises in each case a second controllable valve (51; 61), which in response to the blocking of the first hydraulic connection by the control unit (ECU) by means of the controllable valve device (71, 72, 73) is controlled by the control unit (ECU) in such a way that it establishes a hydraulic connection between the output side of the pump (31) and the input side of the corresponding wheel brake (50; 60).

7. Brake circuit according to one of the preceding claims, in which the controllable valve device (71, 72, 73) comprises a first controllable valve (71), which in the open state establishes the first hydraulic connection and in the closed state blocks the first hydraulic connection.

8. Brake circuit according to claim 7, in which the valve device (71, 72, 73) comprises a second controllable valve (72), which in the open state establishes a second hydraulic connection for the removal of brake pressure from the brake circuit and in the closed state blocks the second hydraulic connection.

9. Hydraulic brake system for a land vehicle, having at least one brake circuit (I, II) according to one of claims 1 to 8.

10. Hydraulic brake system according to claim 9, having a master cylinder (14) for generating a brake pressure generated by a driver of the land vehicle, wherein the at least one valve device (71, 72, 73) of the at least one brake circuit establishes or blocks the respective first hydraulic connection to master cylinder (14).

11. Method of controlling a hydraulic brake system for a land vehicle having at least one brake circuit (I; II), which comprises
- in each case at least one wheel brake (50; 60),
- a controllable wheel-brake valve arrangement (51, 52, 53) associated with one of the at least one wheel brake (50; 60) for controlling the brake pressure characteristic in the at least one wheel brake (50),
- a controllable pump (31) for the controlled build-up of brake pressure in the brake circuit,
wherein the wheel-brake valve arrangement comprises a first controllable valve (52; 62) having a throttle (53; 63) that is effective in the open valve state, and wherein the method has the following steps:
- block the at least one brake circuit (I; II) with regard to a supply of brake pressure generated by a driver of the land vehicle,
- establish a hydraulic connection between the output side of the at least one wheel brake (50; 60) and the input side of the corresponding pump (31), and between the output side of the pump(31) and the input side of the first wheel brake (50) by means of opening the first controllable valve (52; 62), by which means the generation of back-pressure is enabled at the throttle (53; 63),
- generate a predetermined brake pressure (p-pump) at the throttle (53; 63) by means of the corresponding pump (31),
- maintain the predetermined brake pressure (p-pump) after the generation of the predetermined brake pressure (p-pump), by
-- opening the first controllable valve (52; 62), and
-- blocking the hydraulic connection between the output side of the wheel brake (50) and the input side of the pump (31).

12. Method according to claim 11, in which after the blocking of the at least one brake circuit (I; II) the establishment of the hydraulic connection and the generation of the predetermined brake pressure (p-pump) are initiated substantially simultaneously.

13. Method according to claim 11, in which after the blocking of the at least one brake circuit (I; II), the generation of the predetermined brake pressure (p-pump) is initiated before the establishment of the hydraulic connection.

14. Method according to one of claims 11 to 13, in which the predetermined brake pressure (p-pump) is generated in dependence upon the pressure characteristic in the at least one wheel brake (50; 60).

## Revendications

1. Circuit de freinage pour un système de freinage hydraulique d'un véhicule terrestre, comportant
- un premier frein de roue (50),
- une unité de commande (ECU) susceptible de mettre à disposition des signaux de commande (a, ..., g) pour commander des opérations de freinage automatiques du système de freinage,
- un dispositif de valves (71, 72, 73) pilotables pour établir et bloquer une première communication hydraulique pour la transmission d'une pression de freinage produite par un conducteur du véhicule terrestre au circuit de freinage,
- une pompe (31) pilotable pour l'établissement contrôlé d'une pression de freinage dans le circuit de freinage, et
- un premier agencement de valves de frein de roue (51, 52) pilotables, associé au premier frein de roue (50) pour le contrôle de l'évolution de la pression de freinage dans le premier frein de roue (50), l'agencement de valves de frein de roue comportant une première valve (52, 62) pilotable avec un organe d'étranglement (53, 63) actif en position ouverte de ladite valve,
l'unité de commande (ECU) commandant l'agencement de valves de frein de roue (51, 52) et la pompe (31) en réponse à un blocage de la première communication hydraulique par l'unité de commande (ECU) au moyen du dispositif de valves (71, 72, 73) pilotables, de telle sorte que
- le premier agencement de valves de frein de roue (51, 52) occupe une position de service, où une première communication hydraulique est établie
-- entre le côté sortie du premier frein de roue (50) et le côté entrée de la pompe (31) ainsi que
-- entre le côté sortie de la pompe (31) et le côté entrée du premier frein de roue (50), et
permet la génération d'une pression de retenue au niveau de l'organe d'étranglement (53, 63),
- la pompe (31) occupe une position de service, où une pression de freinage (p-pumpe) prédéterminée est générée au niveau du côté entrée du premier frein de roue (50) et une pression de retenue est générée au niveau de l'organe d'étranglement (53, 63), et
- après la génération de la pression de freinage (p-pumpe) prédéterminée, celle-ci est maintenue par le fait que l'agencement de valves de frein de roue (51, 52) occupe une position de service dans laquelle
-- la communication hydraulique est établie entre le côté sortie de la pompe (31) et le côté entrée du premier frein de roue (50), et
-- la communication hydraulique est bloquée entre le côté sortie du frein de roue (50) et le côté entrée de la pompe (31).

2. Circuit de freinage selon la revendication 1, comportant
- un deuxième frein de roue (60), et
- un second agencement de valves de frein de roue (61, 62) pilotables, associé au second frein de roue (60) pour le contrôle de l'évolution de la pression de freinage dans le second frein de roue (60),
l'unité de commande (ECU) commandant le second agencement de valves de frein de roue (61, 62) et la pompe (31) en réponse au blocage de la première communication hydraulique, de telle sorte que
- le second agencement de valves de frein de roue (61, 62) occupe une position de service, où une seconde communication hydraulique est établie entre le côté sortie du second frein de roue (60) et le côté entrée de la pompe (31), et
- la pompe (31) assure la génération de la pression de freinage (p-pumpe) prédéterminée également au niveau du côté entrée du second frein de roue (60).

3. Circuit de freinage selon l'une des revendications 1 ou 2, dans lequel l'unité de commande (ECU) commande la pompe (31) et le au moins un agencement de valves de frein de roue (51, 52 ; 61, 62), de sorte que la pompe (31) et le au moins un agencement de valves de frein de roue (51, 52 ; 61, 62) occupent leurs positions de service sensiblement de façon simultanée, en réponse au blocage de la première communication hydraulique.

4. Circuit de freinage selon l'une des revendications 1 ou 2, dans lequel l'unité de commande (ECU) commande la pompe (31), en réponse au blocage de la première communication hydraulique par l'unité de commande (ECU) au moyen du dispositif de valves (71, 72, 73) pilotables, de telle sorte que ladite pompe occupe sa position de service avant que le au moins un agencement de valves de frein de roue (51, 52; 61, 62) occupe sa position de service.

5. Circuit de freinage selon l'une des revendications précédentes, dans lequel l'unité de commande (ECU) modifie le débit de la pompe (31) en fonction de l'évolution de la pression dans le au moins un frein de roue (50 ; 60) pour générer la pression de freinage (p-pumpe) prédéterminée.

6. Circuit de freinage selon la revendication 1, dans lequel le au moins un agencement de valves de frein de roue (51, 52 ; 61, 62) comporte respectivement une seconde valve (51 ; 61) pilotable, qui, en réponse au blocage de la première communication hydraulique par l'unité de commande (ECU) au moyen du dispositif de valves (71, 72, 73) pilotable, est commandée par l'unité de commande (ECU), de telle sorte qu'une communication hydraulique est établie entre le côté sortie de la pompe (31) et le côté entrée du frein de roue (50 ; 60) correspondant.

7. Circuit de freinage selon l'une des revendications précédentes, dans lequel le dispositif de valves (71, 72, 73) pilotables comporte une première valve (71) pilotable qui établit la première communication hydraulique en position ouverte et bloque la première communication hydraulique en position fermée.

8. Circuit de freinage selon la revendication 7, dans lequel le dispositif de valves (71, 72, 73) comporte une seconde valve (72) pilotable qui, en position ouverte, établit une seconde communication hydraulique pour évacuer la pression de freinage du circuit de freinage et qui, en position fermée, bloque la seconde communication hydraulique.

9. Système de freinage hydraulique pour un véhicule terrestre, comprenant au moins un circuit de freinage (I., II.) selon l'une des revendications 1 à 8.

10. Système de freinage hydraulique selon la revendication 9, comportant un maître-cylindre (14) pour la génération une pression de freinage produite par le conducteur du véhicule terrestre, le au moins un dispositif de valves (71, 72, 73) pilotables du au moins un circuit de freinage établissant ou bloquant la première communication hydraulique correspondante avec le maître-cylindre (14).

11. Procédé de commande d'un système de freinage hydraulique pour un véhicule terrestre comprenant au moins un circuit de freinage (I. ; II.) comportant :
- respectivement au moins un frein de roue (50 ; 60),
- un agencement de valves de frein de roue (51, 52, 53) pilotables, associé à au moins un frein de roue (50, 60) pour la commande de l'évolution de la pression de freinage dans le au moins un frein de roue (50), et
- une pompe (31) pilotable pour l'établissement contrôlé d'une pression de freinage dans le circuit de freinage, l'agencement de valves de frein de roue comportant une première valve (52 ; 62) pilotable avec un organe d'étranglement (53 ; 63) actif en position ouverte de ladite valve, et le procédé comprenant les étapes suivantes consistant à :
- bloquer le au moins un circuit de freinage (I., II.) par rapport à la transmission d'une pression de freinage produite par un conducteur du véhicule terrestre,
- établir une communication hydraulique entre le côté sortie d'au moins l'un des au moins un frein de roue (50 ; 60) et le côté entrée de la pompe (31) correspondante et entre le côté sortie de la pompe (31) et le côté entrée du premier frein de roue (50) par l'ouverture de la première valve (52 ; 62) pilotable, ce qui permet la génération d'une pression de retenue au niveau de l'organe d'étranglement (53, 63),
- générer une pression de freinage (p-pumpe) prédéterminée au niveau de l'organe d'étranglement (53, 63) au moyen de la pompe (31) correspondante,
- après la génération de la pression de freinage (p-pumpe) prédéterminée, maintenir la pression de freinage (p-pumpe) prédéterminée par le fait que
-- la première valve (52, 62) pilotable est ouverte et
-- la communication hydraulique est bloquée entre le côté sortie du frein de roue (50) et le côté entrée de la pompe (31).

12. Procédé selon la revendication 11, dans lequel, après le blocage du au moins un circuit de freinage (I. ; II.), les étapes consistant à établir la communication hydraulique et à générer la pression de freinage (p-pumpe) prédéterminée sont déclenchées sensiblement de façon simultanée.

13. Procédé selon la revendication 11, dans lequel, après le blocage du au moins un circuit de freinage (I. ; II.), l'étape consistant à générer la pression de freinage (p-pumpe) prédéterminée est déclenchée avant l'étape d'établissement de la communication hydraulique.

14. Procédé selon l'une des revendications 11 à 13, dans lequel la pression de freinage (p-pumpe) prédéterminée est générée en fonction de l'évolution de la pression dans le au moins un frein de roue (50 ; 60).
